Europäisches Patentamt

European Patent Office

Office européen des brevets

(11) Veröffentlichungsnummer: **0 070 961**
**B1**

# (12) EUROPÄISCHE PATENTSCHRIFT

(45) Veröffentlichungstag der Patentschrift :
08.07.87

(51) Int. Cl.⁴ : **B 60 T   8/00**

(21) Anmeldenummer : 82102309.0

(22) Anmeldetag : 20.03.82

(54) Blockiergeschützte Fahrzeugbremsanlage.

(30) Priorität : 30.07.81 DE 3130019

(43) Veröffentlichungstag der Anmeldung :
09.02.83 Patentblatt 83/06

(45) Bekanntmachung des Hinweises auf die Patenterteilung : 08.07.87 Patentblatt 87/28

(84) Benannte Vertragsstaaten :
AT CH DE FR GB IT LI NL SE

(56) Entgegenhaltungen :
FR-A- 2 367 637
FR-A- 2 472 221
GB-A- 2 054 299

(73) Patentinhaber : WABCO Westinghouse Fahrzeugbremsen GmbH
Am Lindener Hafen 21 Postfach 91 12 80
D-3000 Hannover 91 (DE)

(72) Erfinder : Pape, Klaus
Petermannstrasse 14
D-3000 Hannover (DE)
Erfinder : Ruhnau, Gerhard
Schneerenerstrasse 53
D-3057 Neustadt 1 (DE)

(74) Vertreter : Schrödter, Manfred et al
WABCO Westinghouse Fahrzeugbremsen GmbH Am
Lindener Hafen 21 Postfach 91 12 80
D-3000 Hannover 91 (DE)

## Beschreibung

Die Erfindung bezieht sich auf eine blockiergeschützte Fahrzeugbremsanlage gemäß dem Oberbegriff des Patentanspruchs 1. Eine solche Anlage ist aus der GB-A-20 54 299 bekannt.

Bei solchen Anlagen treten in den Ausgangssignalen der Radsensoren manchmal Störimpulse auf. Diese Störimpulse bestehen aus einzelnen Spannungsspitzen, welche bei verschiedenen Schaltvorgängen im elektrischen Bordnetz des Fahrzeugs entstehen und sich infolge von Kopplungen über das gesamte Netz ausbreiten können. Besonders intensive Störimpulse können beim Schalten induktiver Lasten, wie z. B. der Blockierschutz-Magnetventile, entstehen. Hier zeigt sich, daß das regelnde Blockierschutzsystem sich selbst die Meßwertaufnahme stören kann.

Diese Störungen wirken sich besonders schädlich bei solchen Blockierschutzsystemen aus, bei denen eine digitale Meßwertaufnahme und -verarbeitung erfolgt. Die Störimpulse überlagern sich dem Sensorsignal und führen besonders in der Nähe der Nulldurchgänge zum Fehltriggern der in der Eingangsschaltung enthaltenen Periodenzähler. Durch die digitale Meßwertaufnahme werden die Auswirkungen jedes einzelnen Störimpulses voll übertragen und täuschen eine starke Veränderung der Radgeschwindigkeit vor.

Im Gegensatz hierzu bleibt bei einer analogen Meßwerterfassung über Frequenz-Spannungs-Wandler durch das integrale Verhalten des Wandlers der Störimpuls fast ohne Auswirkungen.

Eine einfache Methode der digitalen Filterung besteht darin, ein Datenwort nicht zu verwenden, wenn es um mehr als einen bestimmten Betrag vom vorhergehenden Wort abweicht. Diese Methode ist jedoch für digitale Blockierschutz-Elektroniken weniger geeignet, da die gemessene Geschwindigkeit mehr oder weniger mit hochgezogen werden kann.

Aus der GB-A-20 54 299 ist bereits bekannt, die elektrischen Ausgangssignale eines Radsensors mit Hilfe eines Mikrocomputers in drehzahlabhängige Datenwörter umzuwandeln. Die Datenwörter werden weiter dazu benutzt, im Mikrocomputer Blockierschutz-Regelsignale zu erzeugen. Die bekannte Anordnung offenbart jedoch keine Maßnahmen zur Filterung der Datenwörter.

Der Erfindung liegt die Aufgabe zugrunde, eine blockiergeschützte Fahrzeugbremsanlage mit einer Anordnung für ein digitales Filter anzugeben, welche besonders für die Filterung von Geschwindigkeitsworten in einer Antiblockier-Elektronik geeignet ist.

Diese Aufgabe wird durch die im Patentanspruch 1 enthaltene Erfindung gelöst. Die Unteransprüche enthalten zweckmäßige Ausgestaltungen der Erfindung.

Ein Ausführungsbeispiel der Erfindung wird im folgenden anhand einer Zeichnung näher erläutert. Es ist dargestellt in

Figur 1 ein typischer Verlauf eines Radsensor-Ausgangssignals mit einem einzelnen Störimpuls,

Figur 2 eine Folge von Geschwindigkeitsworten, welche durch den Störimpuls von Fig. 1 gestört ist,

Figur 3 ein Blockschaltbild eines digitalen Blockierschutzsystems mit Filterung der Geschwindigkeitswörter,

Figur 4 die Sprungantwort des in Fig. 3 angewendeten digitalen Filters,

Figur 5 ein Verlauf der gefilterten Radgeschwindigkeit.

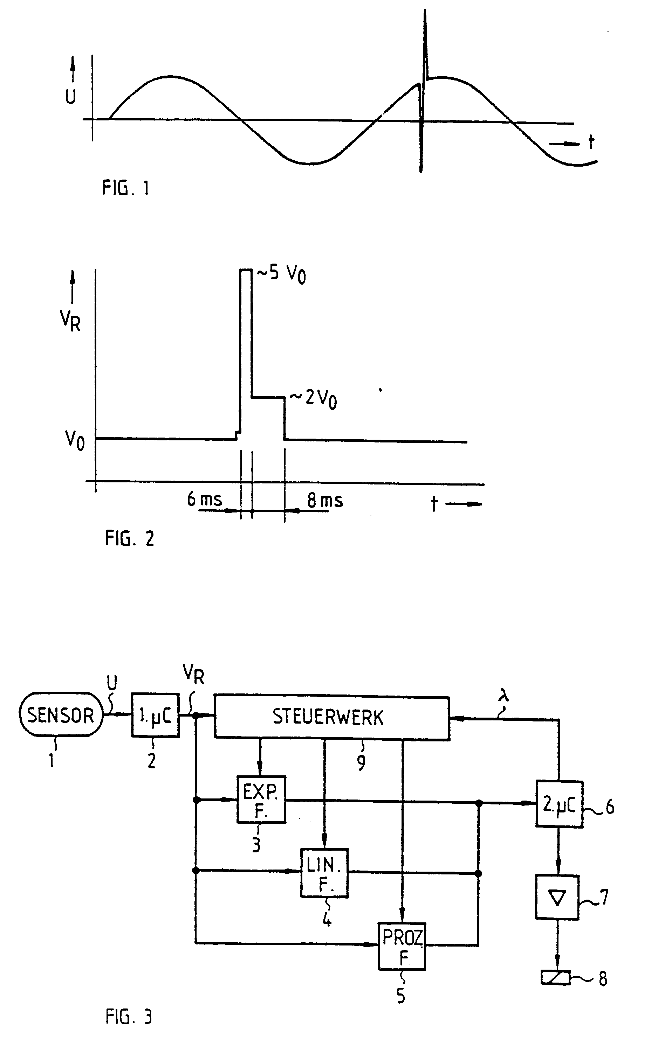

Wie in Fig. 1 gezeichnet, ist die Ausgangsspannung eines Radsensors normalerweise sinusförmig. Infolge eines Störimpulses wird dem Sinus eine Spannungsspitze in der gezeichneten Form überlagert. Bei einer digitalen Verarbeitung der Meßwerte wird zur Erzeugung von Geschwindigkeitswörtern beispielsweise der Abstand zwischen den Nulldurchgängen der Sensor-Ausgangsspannung gemessen. Je kürzer dieser Abstand ist, desto schneller dreht sich das sensierte Rad. Wie aus Fig. 1 nun zu erkennen ist, wird durch den Störimpuls plötzlich eine bedeutend kürzere Zeit zwischen zwei aufeinanderfolgenden Spannungsnulldurchgängen erzeugt. Dies würde ohne eine Filterung von der nachfolgenden Elektronik ausgewertet werden und führte dann zu einem starken Sprung in der Folge der Geschwindigkeitswörter. Es wird also eine viel zu hohe Geschwindigkeit vorgetäuscht.

In Fig. 2 ist eine gestörte Folge von Geschwindigkeits — wörtern dargestellt. Deutlich ist zu sehen, daß nach einer evtl. einlaufenden kleinen Stufe ein großer Sprung erfolgt. Dieser große Sprung erzeugt typisch ein Vielfaches der richtigen Geschwindigkeit $V_0$, beispielsweise das Fünffache. Anschließend springt die Geschwindigkeit auf einen Wert von typisch zweimal $V_0$. Bei einer Sensorfrequenz von 75 Hz, was einer Fahrzeuggeschwindigkeit von etwa 9 km/h entspricht, und einer Meßwerterfassungsrate von 2 ms, kann der große Sprung etwa 6 ms anstehen und der kleinere 8 ms.

Durch eine derartige Störung in der Folge der Geschwindigkeitswörter werden durch die Blockierschutz-Elektronik entsprechende falsche Regelsignale erzeugt. Daher ist man bestrebt, die Störung durch ein digitales Filtern der Geschwindigkeit zu eliminieren. Die deshalb vorgeschlagene erfindungsgemäße Anordnung basiert auf der Analysierung der bei Blockierschutzsystemen auftretenden Störungsformen sowie auf Erfahrungen mit bereits verwendeten Filterungen.

Das neue Filter beruht auf einer Kombination von drei Filterarten, die stufenlos ineinander übergehen.

In Fig. 3 ist ein Beispiel einer Blockierschutzanlage mit digitaler Elektronik dargestellt, in welcher eine Filterung gemäß der Erfindung angewendet wird.

Die Geschwindigkeit eines Fahrzeugrades wird von einem Sensor 1 abgetastet. Dieser gibt eine analoge sinusförmige Wechselspannung U ab (Fig. 1). Diese Spannung wird in einer ersten Mikrocomputer-Anordnung 2 in ein digitales Wort für die Radgeschwindigkeit umgewandelt. Dieses Wort durchläuft anschließend eine Filterschaltung die aus einem Filter mit exponentieller Kennlinie (exponentieller Filter) 3, einem Filter mit linearer Kennlinie (lineares Filter) 4 und einem Filter mit prozentualer Kennlinie (prozentuales Filter) 5 besteht. Das exponentielle Filter 3 kann z. B. eine quadratische Kennlinie haben.

Das so erhaltene gefilterte Geschwindigkeitswort wird in einer zweiten Mikrocomputer-Anordnung 6 nach bestimmten Kriterien in eine Folge von Ein- und Ausschaltsignalen umgewandelt. Diese Signale werden in einem Treiber 7 verstärkt und einem Regel-Magnetventil 8 zugeführt. Das Magnetventil 8 liegt in der Druckmittelleitung, durch welche der Bremszylinder des geregelten Rades beaufschlagt ist.

Die drei Filter 3, 4, 5 sind nicht ständig wirksam, sondern werden nach bestimmten, unter erläuterten Kriterien durch ein Steuerwerk 9 eingeschaltet. Dem Steuerwerk 9 werden als Eingangssignale das ungefilterte Geschwindigkeitswort $V_R$ und aus dem zweiten Mikrocomputer 6 ein Datenwort für den Radschlupf zugeführt.

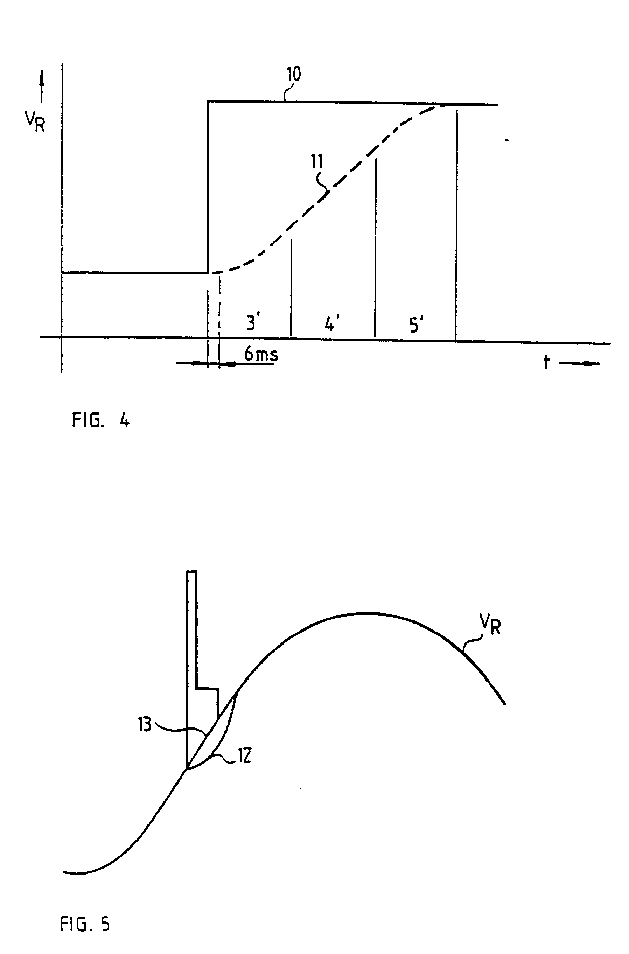

Die Wirkung der digitalen Einzelfilter 3, 4, 5 läßt sich am deutlichsten durch das Verhalten bei der Vorgabe eines Sprunges in der Radgeschwindigkeit beschreiben. Diese Sprungantwort ist in der Fig. 4 dargestellt. Die ungefilterte Geschwindigkeit ist als Kurve 10, die gefilterte Geschwindigkeit als Kurve 11 gezeichnet.

Wie zu erkennen ist, wird in einem Bereich 3' zunächst das exponentielle Filter wirksam. Die Filtersteigung beginnt dabei mit Null und wird anschließend kontinuierlich vergrößert. Hierdurch ergibt sich ein exponentieller Geschwindigkeitszuwachs. Einzelne Störimpulse von beispielsweise 6 ms Dauer fallen in den Bereich mit der Steigung 0 und werden dadurch unterdrückt.

Sobald die Filtersteigung eine vorgegebene Größe erreicht hat (Bereich 4'), wird diese Steigung nicht weiter vergrößert. Dabei steigt die Geschwindigkeit in diesem Bereich 4' der linearen Filterung mit linearer Kennlinie weiter an.

Der sich anschließende Bereich 5' ist der Bereich des prozentualen Filters. Überschreitet ein zur Filterung verwendeter Korrekturwert einen Prozentsatz (z. B. 25 % der Geschwindigkeitsdifferenz zwischen ungefilterter und gefilterter Geschwindigkeit), so wird der Korrekturwert auf diesen Prozentsatz der Differenz gesetzt. Damit nimmt die Filtersteigung wieder ab.

Aus der Sprungantwort erkennt man, daß sich prinzipiell ein Verlauf wie bei einer analogen Filterung höherer Ordnung ergibt.

Diese beschriebene Filterung ist für den normalen Regelverlauf einer Blockierschutzregelung jedoch zu intensiv. Bei kleinen Geschwindigkeitssprüngen wird daher nur der Bereich des linearen Filters und der des prozentualen Filters verwendet. Dies entspricht einer Filterung erster Ordnung mit Steigungsbegrenzung.

Als Kriterium für das Zuschalten auch des exponentiellen Filters wird die Sprunggröße der Geschwindigkeit verwendet. Ist der Sprung der ungefilterten Geschwindigkeit größer als + 75 % oder — 37,5 % und zugleich größer als 10 km/h, so wird die exponentielle Filterung zugelassen. Dies erfolgt durch einen entsprechenden Steuerimpuls des Steuerwerks 9.

Ebenso wird noch eine zweite Ausnahme gemacht : Liegt ein λ Signal (Schlupf) vor und erfolgt der Geschwindigkeitssprung nach unten, so wird das exponentielle Filter ebenfalls nicht zugelassen.

Durch die Filterung werden einzelne Störimpulse in ihrer Wirkung völlig unterdrückt, so daß keine Regelsignale erzeugt werden. Eine Beeinflussung von Regelsignalen ist lediglich dann möglich, wenn der Störimpuls zufällig während einer Radbeschleunigungsphase auftritt. Tritt ein einmaliger Störimpuls während einer Radbeschleunigungsphase auf (s. Fig. 5), so ergibt sich für die Radgeschwindigkeit $V_R$ im Anschluß an die Störung ein Verlauf nach der Kurve 12.

Es besteht nun die Möglichkeit, beim Einsetzen der exponentiellen Filterung nicht mit der Steigung Null zu beginnen, sondern mit der Steigung, die der Beschleunigung des Rades unmittelbar vor der Störung entspricht. Hierdurch ergibt sich eine gefilterte Kurve für die Radgeschwindigkeit, welche weitgehend der unbeeinflußten Geschwindigkeit 13 entspricht. Damit bleiben die Regelsignale unbeeinflußt.

Anstelle von diskreten Bauelementen 2, 3, 4, 5, 6, 9 kann natürlich auch ein entsprechend programmierter Mikrocomputer eingesetzt werden. Dies hat den Vorteil größerer Wirtschaftlichkeit. Das Filterverfahren bleibt dabei gleich.

**Patentansprüche**

1. Blockiergeschützte Fahrzeugbremsanlage mit Sensoren (1) zum Abtasten der Radgeschwindigkeiten, mit einer Mikrocomputer-Anordnung (2, 6) zur Umwandlung der Signale der Sensoren (1) in Geschwindigkeits-Datenwörter und zur Erzeugung von Blockierschutz-Regelsignalen zur Steuerung der den Bremszylindern zugeordneten Magnetventile (8), gekennzeichnet durch folgende Merkmale :

a) es ist eine an eine erste Mikrocomputer-Anordnung (2) angeschlossene Filterschaltung vorgesehen, die aus einem digitalen Filter mit exponentieller Kennlinie (exponentielles Filter 3), einem digitalen Filter mit linearer Kennlinie (lineares Filter 4) und einem digitalen Filter mit prozentualer Kennlinie (prozentuales Filter 5) besteht ;

b) es ist ein Steuerwerk (9) zur Aktivierung wenigstens eines Filters der Filterschaltung beim Auftreten eines Störimpulses im Ausgangssignal des Sensors (1) vorgesehen ;

c) es ist eine an die Filterschaltung angeschlossene zweite Mikrocomputer-Anordnung (6) zur Erzeugung von Blockierschutz-Regelsignalen aus den gefilterten Geschwindigkeits-Datenwörtern vorgesehen.

2. Blockiergeschützte Fahrzeugbremsanlage nach Anspruch 1 dadurch gekennzeichnet, daß bei einem insbesondere durch einen Störimpuls verursachten Sprung in der Folge der Geschwindigkeits-Datenwörter die Kennlinie des exponentiellen Filters (3) eine Anfangssteigung von Null hat und das Filter (3) dann aktiviert wird, wenn der Geschwindigkeitssprung größer als 10 km/h ist.

3. Blockiergeschützte Fahrzeugbremsanlage nach Anspruch 2, dadurch gekennzeichnet, daß das exponentielle Filter (3) dann aktiviert wird, wenn der Geschwindigkeitssprung größer als + 75 % oder — 37,5 % der Ausgangsgeschwindigkeit ist.

4. Blockiergeschützte Fahrzeugbremsanlage nach Anspruch 2, dadurch gekennzeichnet, daß das exponentielle Filter (3) nicht aktiviert wird, wenn in der zweiten Mikrocomputer-Anordnung (6) ein Schlupfsignal (λ) erscheint und der Geschwindigkeitssprung in Richtung kleinerer Geschwindigkeiten erfolgt.

5. Blockiergeschützte Fahrzeugbremsanlage nach Anspruch 2, dadurch gekennzeichnet, daß das lineare Filter (4) abgeschaltet wird, sobald die Differenz zwischen der gefilterten Geschwindigkeit und der von der ersten Mikrocomputer-Anordnung (2) abgegebenen ungefilterten Geschwindigkeit einen bestimmten Betrag unterschreitet.

6. Blockiergeschützte Fahrzeugbremsanlage nach Anspruch 1, dadurch gekennzeichnet, daß die Kennlinie des exponentiellen Filters (3) eine Anfangssteigung hat, die der Beschleunigung des sensierten Rades vor Eintreten des Störimpulses entspricht.

7. Blockiergeschützte Fahrzeugbremsanlage nach einem oder mehreren der Ansprüche 1 bis 6, dadurch gekennzeichnet, daß zur Durchführung der Funktionen der Filterschaltung (3, 4, 5, 9) ein Mikrocomputer vorgesehen ist.

## Claims

1. Anti-lock vehicle braking system having sensors (1) responsive to the wheel speeds, having a micro-computer arrangement (2, 6) for converting the signals from the sensors (1) into speed data words and for generating anti-lock control signals for controlling the solenoid valves (8) assigned to the brake cylinders, characterised by the following features :

a) a filter circuit is provided which is connected to a first microcomputer arrangement (2) and which comprises a digital filter having an exponential characteristic curve (exponential filter 3), a digital filter having a linear characteristic curve (linear filter 4) and a digital filter having a proportional characteristic curve (proportional filter 5) ;

b) a control unit (9) is provided for activating at least one filter of the filter circuit when a disturbing pulse occurs in the output signal of the sensor (1) ;

c) a second microcomputer arrangement (6) which is connected to the filter circuit is provided for generating anti-lock control signals from the filtered speed data words.

2. Anti-lock vehicle braking system according to claim 1, characterised in that in the case of a jump in the sequence of the speed data words caused especially by a disturbing pulse, the characteristic curve of the exponential filter (3) has an initial gain of zero, and the filter (3) is activated when the speed jump is greater than 10 km/h.

3. Anti-lock vehicle braking sytem according to claim 2, characterised in that the exponential filter (3) is activated when the speed jump is greater than + 75 % or — 37.5 % of the initial speed.

4. Anti-lock vehicle braking system according to claim 2, characterised in that the exponential filter (3) is not activated if a slip signal (λ) appears in the second microcomputer arrangement (6) and the speed jump is in the direction of lower speeds.

5. Anti-lock vehicle braking system according to claim 2, characterised in that the linear filter (4) is switched off as soon as the difference between the filtered speed and the unfiltered speed output by the first microcomputer arrangement (2) falls below a certain value.

6. Anti-lock vehicle braking system according to claim 1, characterised in that the characteristic curve of the exponential filter (3) has an initial gain that corresponds to the acceleration of the sensed wheel before the occurrence of the disturbing signal.

7. Anti-lock vehicle braking system according to one or more of claims 1 to 6, characterised in that in order to carry out the functions of the filter circuit (3, 4, 5, 9) a microcomputer is provided.

## Revendications

1. Installation de freinage à antiblocage pour véhicule, possédant des capteurs (1) pour détecter les vitesses des roues et un dispositif à microcalculateur (2, 6) pour convertir les signaux des capteurs (1) en mots de données de vitesse et pour produire des signaux de réglage antiblocage servant à la commande des électrovannes (8) coordonnées aux cylindres de frein, caractérisée en ce qu'elle comprend :

a) un circuit filtrant connecté à une première unité-microcalculateur (2) et constitué d'un filtre numérique à caractéristique exponentielle (filtre exponentiel 3), d'un filtre numérique à caractéristique linéaire (filtre linéaire 4) et d'un filtre numérique ayant une caractéristique à pourcentage (filtre à pourcentage 5) ;

b) un dispositif de commande (9) pour activer au moins l'un des filtres du circuit filtrant en cas d'apparition d'une impulsion parasite dans le signal de sortie du capteur (1) ; et

c) une seconde unité-microcalculateur (6), connectée au circuit filtrant, pour produire des signaux de réglage antiblocage à partir des mots de données de vitesse filtrés.

2. Installation selon la revendication 1, caractérisée en ce que, dans le cas d'un saut dans la succession des mots de données de vitesse, saut qui est provoqué notamment par une impulsion parasite, la caractéristique du filtre exponentiel (3) présente une pente initiale nulle, ce filtre étant seulement activé si le saut de vitesse est supérieur à 10 km/h.

3. Installation selon la revendication 2, caractérisée en ce que le filtre exponentiel (3) est activé lorsque le saut de vitesse est plus grand que + 75 % ou — 37,5 % de la vitesse de départ.

4. Installation selon la revendication 2, caractérisée en ce que le filtre exponentiel (3) n'est pas activé lorsqu'un signal de patinage (λ) apparaît dans la seconde unité-microcalculateur (6) et lorsque le saut de vitesse s'effectue dans le sens de la diminution de la vitesse.

5. Installation selon la revendication 2, caractérisée en ce que le filtre linéaire (4) est mis hors circuit dès que la différence entre la vitesse filtrée et la vitesse non filtrée, délivrée par la première unité-microcalculateur (2), descend au-dessous d'une valeur déterminée.

6. Installation selon la revendication 1, caractérisée en ce que la caractéristique du filtre exponentiel (3) possède une pente initiale qui correspond à l'accélération de la roue détectée avant l'apparition de l'impulsion parasite.

7. Installation selon une ou plusieurs des revendications 1 à 6, caractérisée en ce qu'un microcalculateur est prévu pour exécuter les différentes fonctions du circuit filtrant (3, 4, 5, 9).

FIG. 1

FIG. 2

FIG. 3

1

FIG. 4

FIG. 5